(19) Europäisches Patentamt
European Patent Office
Office européen des brevets

(11) EP 3 174 009 A1

(12) **EUROPEAN PATENT APPLICATION**

(43) Date of publication:
**31.05.2017 Bulletin 2017/22**

(51) Int Cl.:
***G06T 7/00*** (2017.01)

(21) Application number: **15306876.2**

(22) Date of filing: **26.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventor: **Theis, Oliver**
**32689 Kalletal (DE)**

(74) Representative: **Huchet, Anne et al**
**TECHNICOLOR**
**1-5, rue Jeanne d'Arc**
**92130 Issy-les-Moulineaux (FR)**

(54) **METHOD AND APPARATUS FOR DETERMINING A CONTRAST VALUE FOR AN IMAGE**

(57)    Various metrics for evaluating contrast in different applications are known, most of which make prior assumptions about the image content. Further, known contrast metrics do not provide reasonable values if dark and light luminance values are unequally distributed within an image. An improved method for determining a contrast value (C) for an image (im) comprises performing edge detection (10) on the image (im), calculating a weighted RMS value (20) over pixels of the image, wherein pixels that according to the edge detection belong to an edge have higher weight than other pixels, and scaling (30) the weighted RMS value ($C_{WRMS}$) with a constant factor to obtain a scaled weighted RMS value ($C_{WRMS}$). The scaled weighted RMS value ($C_{WRMS,s}$) is said contrast value (C) of the image.

Fig.2

**Description**

Field

The present principles relate to a method for determining a contrast value for an image and an apparatus for determining a contrast value for an image.

Background

The term "contrast" is used in differed domains of vision, e.g. human perception, image processing, image acquisition and image display. Different definitions of the term "contrast" exist in the field of image processing. It is often distinguished between global contrast and local contrast, as well as color contrast and luminance contrast.

Generally, contrast is a measure of the difference between the darkest and brightest spot within an image. Many different metrics for evaluating contrast in different applications are known. Most of them make prior assumptions about the image content. However, it would be desirable to have a contrast metric that does not rely on prior assumptions.

Known contrast types are e.g. Weber contrast, Michelson contrast and Root-Mean-Square (RMS) contrast.

Weber contrast is a metric that applies to images with small features on a uniform background. A difference in luminance is set in relation to a background luminance $L_b$:

$$C = (L - L_b) / L_b \qquad\qquad (1)$$

Michelson contrast is a metric that applies to images of patterns with equal distribution of dark and bright features. A difference in luminance is set in relation to (twice) an average luminance:

$$C = (L_{max} - L_{min}) / (L_{max} + L_{min}) \qquad\qquad (2)$$

For luminance values in the range [0,...,1], the Michelson contrast provides values in the range [0,...,1]. For binary images, the Michelson contrast results in a contrast value of one (C=1), independent from the distribution of image values.

While Weber's metric and Michelson's metric are quite similar and apply to certain artificial test pattern, they are not suited for real world natural images that often contain noise or level clipping. That is, they are not robust and will likely show erroneous results in such cases.

Levien found in [1] that the well-known standard deviation, or Root-Mean-Square (RMS), was a much better suited metric for contrast in his application. This definition of contrast was already proposed in [2]. Levien in [1] proposed:

$$C = \mathrm{sqrt}(\mathrm{mean}(\mathrm{power}(\mathbf{L} - L_{mean}, 2)))) = \sqrt{\overline{(L - L_{mean})^2}} \qquad (3)$$

For luminance values in the range [0,...,1], the RMS metric provides values in the range [0,...,0.5]. The maximum value of 0.5 is only reached for binary images with equal distribution of image values. However, the RMS contrast metric does not provide reasonable values in some cases.

Summary

The known contrast metrics, and in particular the RMS metric, do not provide reasonable values if dark and light luminance values are unequally distributed within an image, i.e. the distribution of luminance values in the image is skewed. The present principles solve at least this problem.

Advantageously, the present principles can be used for input images where conventional contrast estimation fails. One advantage of the present principles is that a global image contrast value is obtained, rather than local contrast values for every single pixel.

According to the present principles, a weighted RMS metric (WRMS) is used to measure image contrast $C_{WRMS}$, where the weights are related to image gradients. Image gradients indicate at least edges. As an effect of the weights, pixel values at edge locations get higher weights assigned and thus contribute stronger to the contrast value than those in flat image regions.

In an embodiment, a method for determining a contrast value for an image comprises performing edge detection on the image and calculating a weighted RMS value over pixels of the image, wherein pixels that according to the edge detection belong to an edge have higher weight than other pixels. In principle, the weighted RMS value can be used as said contrast value of the image. However, in embodiments, the method further comprises scaling the weighted RMS value with a constant factor to obtain a scaled weighted RMS value. Further, in embodiments, the method further comprises clipping the scaled weighted RMS value to a maximum value to obtain said contrast value of the image.

In an embodiment, an apparatus for determining a contrast value for an image has elements as disclosed in claim 9.

In an embodiment, a computer readable storage medium has stored thereon executable instructions to cause a computer to perform a method as disclosed in claim 1.

In an embodiment, a computer program for executing in a computing device, the computer program being stored on a storage medium, comprises instructions to cause a computer to perform a method as disclosed in claim 1.

In an embodiment, an apparatus for determining a contrast value for an image comprises at least one hardware processor and at least one non-transitory, tangible, computer-readable storage medium tangibly embodying at least one software component, wherein the software component when executing on the at least one hardware processor causes the processor to perform a method as disclosed in claim 1.

Advantageous embodiments are disclosed in the dependent claims, the following description and the figures.

Brief description of the drawings

Exemplary embodiments of the present principles are described with reference to the accompanying drawings, which show in

Fig.1    a flow-chart of a method for determining a contrast value for an image; and

Fig.2    a block diagram of an apparatus for determining a contrast value for an image.

Detailed description of preferred embodiments

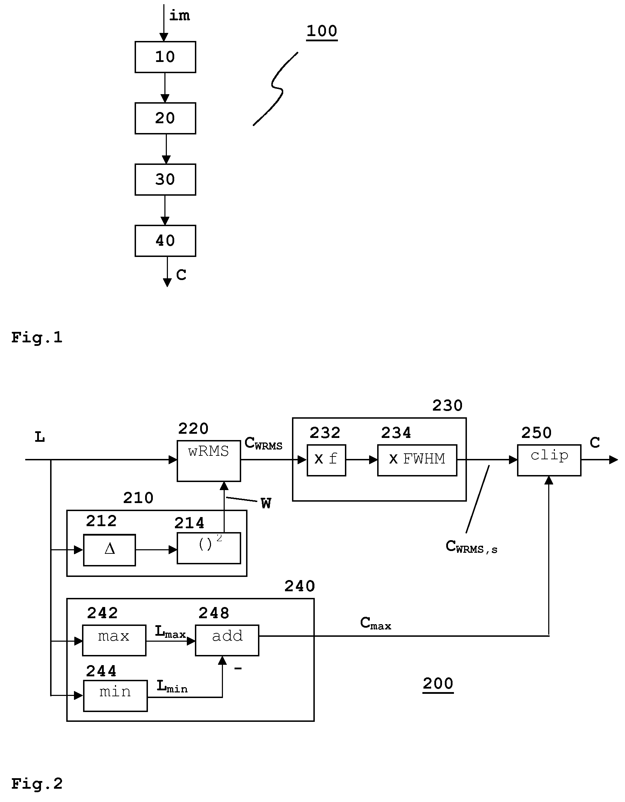

Fig.1 shows a flow-chart of a method 100 for determining a contrast value C for an image im, in one embodiment. The method 100 comprises performing edge detection 10 on the image and calculating 20 a weighted RMS value $C_{WRMS}$ over pixels of the image, wherein pixels that according to the edge detection belong to an edge have higher weight than other pixels. In one embodiment, the method further comprises scaling 30 the weighted RMS value $C_{WRMS}$ with a constant factor to obtain a scaled weighted RMS value $C_{WPMS,s}$ that is suitable for serving as said contrast value C of the image.

In one embodiment, the method further comprises clipping 40 the scaled weighted RMS value to a maximum value to obtain said contrast value C of the image. In one embodiment, the scaled weighted RMS value $C_{WRMS,s}$ is clipped to an adaptive maximum value. In one embodiment, the adaptive maximum value is derived from a difference between maximum and minimum luminance values of the image $L_{max}$ and $L_{min}$, with $L_{max}$ and $L_{min}$ being maximum and minimum luminance values respectively of pixels within the image. In an embodiment, the adaptive maximum value is said difference between $L_{max}$ and $L_{min}$, according to $C_{max}=L_{max}-L_{min}$. In another embodiment, the adaptive maximum value is said difference between $L_{max}$ and $L_{min}$, multiplied with a constant factor k. The constant factor k may but needs not be close to one ($k \approx 1$), e.g. k=[0,5 ... 1,5].

In one embodiment, the edge detection and/or the weighted RMS value calculated over pixels of the image use luminance values of said pixels.

In one embodiment, the edge detection 10 comprises retrieving stored gradient values resulting from edge detection that was done earlier. In one embodiment, the edge detection 10 provides a gradient g for at least one pixel, and the weight of said at least one pixel is calculated according to the gradient g. In one embodiment, the weight w of said pixel is calculated according to w=g. In another embodiment, the weight w of said pixel is calculated according to $w=g^2$.

In one embodiment, the weighted RMS value is calculated 20 as a square root of a normalized weighted average of square deviations from a mean value $L_{mean}$ according to

$$C_{WRMS} = \sqrt{\frac{\sum W(L-L_{mean})^2}{\sum W}} \qquad\qquad (4)$$

Here, $L$ denotes luminance values of pixels, W denotes the weights assigned to said pixels, and $L_{mean}$ is a mean value calculated by a sum of weighted luminance values divided by a sum of luminance values. For example, the mean value can be calculated by

$$L_{mean} = \frac{\sum L*W}{\sum W} \qquad\qquad (5)$$

Fig.2 shows an apparatus 200 for determining a contrast value C for an image, in one embodiment. The apparatus 200 comprises circuitry implementing

a weight determining unit 210 adapted for determining a weight associated with a pixel of the image, wherein pixels that according to an edge detection belong to an edge have higher weight than other pixels,

a calculation unit 220 adapted for calculating a weighted RMS value $C_{WRMS}$ of pixels of the image, based on said weights associated with the pixels, and

a scaling unit 230 adapted for scaling the weighted RMS value, wherein a scaled weighted RMS value $C_{WRMS,s}$ is obtained. The scaled weighted RMS value $C_{WRMS,s}$ is said contrast value C.

In embodiments, the weight determining unit 210 may comprise a processor adapted (e.g. programmed) for performing edge detection on the image, or an interface adapted for retrieving results of such edge detection. In embodiments, the weight determining unit 210 may comprise circuitry adapted for assigning the respective weight to each of the processed pixels. For example, the weight determining unit 210 may comprise an edge detection unit with a multitude of derivative kernels known in the literature for computing gradients or a gradient magnitude matrix **G,** from the luminance values **L.** The edge detection computes weights w or a weight matrix **W** at least for pixels that are part of an edge. The weight determining unit 210 may comprise circuitry for assigning a weight at least to the respective pixels. Other pixels may be assigned a neutral weight, such as a "1". This may also be done implicitly, e.g. by assigning no value at all to these pixels. In the most simple case, the weight matrix **W** equals the gradient magnitude matrix **G,** ie. the weight w of a pixel is its gradient g. But it has been found that better results are obtained if each weight w goes with the square of the respective gradient g, e.g. according to $w=g^2$. Thus, in an embodiment, the weight matrix **W** comprises squares of the gradients of the gradient magnitude matrix **G.** In different embodiments, the edge detection provides the gradient magnitude matrix **G** by using at least one of a Sobel operator, a Prewitt operator and a Laplace operator.

In embodiments, the calculation unit 220 may be a processor adapted (programmed) for calculating a weighted RMS value $C_{WRMS}$ of pixels of the image, according to eq.(4) and eq.(5) above.

In an embodiment, the scaling unit 230 adapted for scaling the weighted RMS value to obtain a scaled weighted RMS value $C_{WRMS,s}$ is a multiplier. In another embodiment, the scaling unit 230 is a processor adapted for scaling the weighted RMS value. In one embodiment, the scaling unit 230 multiplies the weighted RMS value $C_{WRMS}$ with a fixed value of 2. This leads to a scaled weighted RMS value in the range [0,...,1] for equally distributed binary images, since the weighted RMS value will, like the conventional RMS value, be in the range [0,...,0.5] for equally distributed binary images. However, the scaling unit 230 may apply also another fixed value. This is advantageous for images that are not equally distributed binary images. Further, in one embodiment, the scaling unit 230 applies also a factor of

$2\sqrt{2ln2} \approx 2.355.$ This factor usually defines the width of a portion of a normal distribution where values have at least half the maximum values, ie. the full width at half maximum (FWHM), relative to the standard deviation of the normal distribution: FHWM $\approx 2.355\sigma$. This is advantageous since it scales the contrast value for typical natural images to the range [0,...,1]. Applying these factors to the weighted RMS value stretches the resulting contrast values of typical natural images to the range [0,...,1]:

$$C = 2 \times 2.355 \times C_{WRMS} \qquad\qquad (6)$$

Thus, a total scaling factor s of or around 2 x 2.355 = 4.71 can be used, e.g. s=[4.5,...,5]. However, for non-typical images, such as images with strong contrast (such as, e.g., some artificially generated images), the resulting contrast value C is greater than 1. Since the resulting contrast value C can be up to 2.355 in the above embodiment (or up to 2.5 in an embodiment where a scaling factor s in the range [4.5,...,5] is used), it may be advantageous in some cases to limit this value. Therefore, the resulting contrast C is limited to a maximum value $C_{MAX}$, in one embodiment. For example, a maximum value $C_{MAX}$ can be defined by a difference between a maximum and a minimum luminance value within an image, according to $C_{MAX} = L_{max} - L_{MIN}$.

In an embodiment, the apparatus 200 further comprises circuitry implementing a clipping value determining unit 240 adapted for determining a maximum value $C_{MAX}$ from the image as clipping value. In an embodiment, the clipping value determining unit 240 can access pixel values of the image, e.g. from an image buffer, and determine respective maximum and minimum pixel values $L_{MAX}, L_{MIN}$ in a maximum pixel luminance value determining unit 242 and a minimum pixel luminance value determining unit 244, respectively. A difference $C_{MAX}$ between the determined maximum pixel luminance value $L_{MAX}$ and the determined minimum pixel luminance value $L_{MIN}$ is calculated in a subtractor 246.

In an embodiment, the apparatus 200 further comprises circuitry implementing a clipping unit 250 adapted for clipping the scaled weighted RMS value $C_{WRMS,s}$ according to the determined clipping value $C_{MAX}$. Then, the clipped scaled weighted RMS value $C_{WRMS,s}$ is said contrast value C.

The obtained contrast value C of an image can be used in several different applications, such as image quality assessment or image processing. E.g. the contrast value C may be stored as metadata of the image or together with the image, or it may be used for adjusting an exposure time before recording the image, or for HDR tone mapping. For example, luminance black and white levels in a camera can be estimated by

$$L_{black} = L_{mean} - C/2 \qquad (7)$$

$$L_{white} = L_{mean} + C/2 \qquad (8)$$

The estimated black and white levels can be used for exposure time adjustment in the camera or HDR tone mapping.

The term "matrix" as used herein refers to a two-dimensional field of numbers. Thus, a "matrix" does not imply matrix operations in the sense of linear algebra. E.g., a multiplication of luminance values **L** with a weight matrix **W** means that each element of the luminance matrix **L**, ie. each pixel of the image, is multiplied with its respective weight w from the weight matrix **W.**

The use of the verb "comprise" and its conjugations does not exclude the presence of elements or steps other than those stated in a claim. Furthermore, the use of the article "a" or "an" preceding an element does not exclude the presence of a plurality of such elements. Several "means" may be represented by the same item of hardware.

As used herein, terms like "image", "contrast", "weight" etc. do not describe a mere mathematical abstraction, but instead denote information embodied in or carried by a physical medium capable of detection by a machine or apparatus. These terms include recorded or transmitted signals, and should be understood to include conveyance by any form of encoding, including but not limited to pulse code modulation (PCM).

The term contrast herein generally may refer to a metric with values in the range [0,...,1] for a luminance matrix **L**. The luminance matrix **L** comprises luminance values of pixels of an image.

While there has been shown, described, and pointed out fundamental novel features of the present principles as applied to preferred embodiments thereof, it will be understood that various omissions and substitutions and changes in the apparatus and method described, in the form and details of the apparatus disclosed, and in its operation, may be made by those skilled in the art without departing from the spirit of the present principles. Although the description discloses use of specific edge detection algorithms, one skilled in the art would recognize that any edge detection algorithms may be applied in the method and apparatus described herein. It is expressly intended that all combinations of those elements that perform substantially the same function in substantially the same way to achieve the same results are within the scope of the present principles. Substitutions of elements from one described embodiment to another are also fully intended and contemplated.

It will be understood that the present principles have been described purely by way of example, and modifications of detail can be made. Each feature disclosed in the description and (where appropriate) the claims and drawings may be provided independently or in any appropriate combination. Features may, where appropriate be implemented in hardware, software, or a combination of the two. Connections may, where applicable, be implemented as wireless (ie. over-the-air) connections or wired, not necessarily direct or dedicated, connections.

Cited References

[1] "Resolution-Dependence of Perceived Contrast of Textures", Ralph Levien (http://www.levien.com/pubs/contrast.pdf)

[2] "Contrast in Complex Images", Eli Peli in: J.Opt.Soc.Am.A/Vol. 7, No. 10/October 1990 (http://serinet.meei.harvard.edu/faculty/peli/papers/ContrastJOSA. pdf)

**Claims**

1. A method (100) for determining a contrast value (C) for an image (im), comprising

   - performing edge detection (10) on the image (im);
   - calculating a weighted RMS value (20) over pixels of the image, wherein pixels that according to the edge detection belong to an edge have higher weight than other pixels; and
   - scaling (30) the weighted RMS value ($C_{WRMS}$) with a constant factor to obtain a scaled weighted RMS value ($C_{WRMS,s}$), wherein the scaled weighted RMS value ($C_{WRMS,s}$) is said contrast value (C) of the image.

2. The method according to claim 1, wherein the edge detection (10) and the weighted RMS value (20) calculated over pixels of the image use a luminance value of said pixels.

3. The method according to 1 or 2, wherein the edge detection (10) provides a gradient (G) for at least one pixel, and the weight of said at least one pixel is calculated according to the gradient (G).

4. The method according to claim 3, wherein the weight (W) of said pixel is calculated according to W=G.

5. The method according to claim 3, wherein the weight (W) of said pixel is calculated according to $W=G^2$.

6. The method according to any of claims 1-5, wherein the weighted RMS value is calculated (20) as a square root of a normalized weighted average of square deviations from a mean value $L_{mean}$ according to

$$C_{WRMS} = \sqrt{\frac{\sum W(L-L_{mean})^2}{\sum W}}$$

   where $L$ denotes luminance values of pixels, $W$ denotes the weights assigned to said pixels, and $L_{mean}$ is a sum of weighted luminance values divided by a sum of luminance values.

7. The method according to any of claims 1-6, further comprising

   - clipping (40) the scaled weighted RMS value to a maximum value to obtain said contrast value (C) of the image.

8. The method according to claim 7, wherein the scaling uses a scaling factor of 4.71 and wherein the scaled weighted RMS value ($C_{WRMS,s}$) is clipped to a maximum value of $C_{max}=L_{max}-L_{min}$ with $L_{max}$ and $L_{min}$ being maximum and minimum luminance values respectively of pixels within the image.

9. An apparatus (200) for determining a contrast value (C) for an image, comprising

   - a weight determining unit (210) adapted for determining weights associated with pixels of the image, wherein pixels that according to an edge detection belong to an edge have higher weight than other pixels;
   - a calculation unit (220) adapted for calculating a weighted RMS value ($C_{WRMS}$) of pixels of the image, based on said weights associated with the pixels; and
   - a scaling unit (230) adapted for scaling the weighted RMS value, wherein a scaled weighted RMS value ($C_{WRMS,s}$) is obtained that is said contrast value (C).

10. The apparatus according to claim 9, further comprising

    - a clipping value determining unit (240) adapted for determining a clipping value ($C_{MAX}$) from the image; and
    - a clipping unit (250) adapted for clipping the scaled weighted RMS value ($C_{WRMS,s}$) according to the determined clipping value ($C_{MAX}$), wherein the clipped scaled weighted RMS value is said contrast value (C).

11. The apparatus according to claim 9 or 10, wherein the weight determining unit (210) comprises an edge detection unit for performing an edge detection.

12. The apparatus according to one of the claims 9-11, wherein the weight (W) of said pixel is calculated as the square of a gradient, the gradient being determined in edge detection.

13. The apparatus according to one of the claims 9-12, wherein the weighted RMS value is calculated as a square root of a normalized weighted average of square deviations from a mean value $L_{mean}$ according to

$$C_{WRMS} = \sqrt{\frac{\sum W(L-L_{mean})^2}{\sum W}}$$

where $L$ denotes luminance values of pixels, $W$ denotes the weights assigned to said pixels, and $L_{mean}$ is a sum of weighted luminance values divided by a sum of luminance values.

14. An apparatus for determining a contrast value for an image, comprising a processor and a memory storing instructions that, when executed by the processor, cause the apparatus to perform the method of any one of the claims 1-8.

15. A computer readable storage medium having stored thereon executable instructions to cause a computer to perform a method (100) for determining a contrast value ($C_{WRMS}$) for an image (im) according to any one of the claims 1-8.

im

10

20

30

40

C

100

**Fig.1**

L

220 wRMS $C_{WRMS}$

230
232 x f
234 x FWHM

250 clip C

210
212 Δ
214 $()^2$

W

$C_{WRMS,s}$

240
242 max $L_{max}$
248 add $C_{max}$
244 min $L_{min}$
-

200

**Fig.2**

Europäisches
Patentamt

European
Patent Office

Office européen
des brevets

# EUROPEAN SEARCH REPORT

Application Number

EP 15 30 6876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEBING LIU ET AL: "No Reference Block Based Blur Detection", QUALITY OF MULTIMEDIA EXPERIENCE, 2009. QOMEX 2009. INTERNATIONAL WORKSHOP ON, IEEE, PISCATAWAY, NJ, USA, 29 July 2009 (2009-07-29), pages 75-80, XP031528698, ISBN: 978-1-4244-4370-3 * section 3; paragraph [0001] * * section 4 * | 1-5, 7-12,14, 15 | INV. G06T7/00 |
| X | MARZILIANO P ET AL: "Perceptual blur and ringing metrics: application to JPEG2000", SIGNAL PROCESSING. IMAGE COMMUNICATION, ELSEVIER SCIENCE PUBLISHERS, AMSTERDAM, NL, vol. 19, no. 2, 1 February 2004 (2004-02-01), pages 163-172, XP004483133, ISSN: 0923-5965, DOI: 10.1016/J.IMAGE.2003.08.003 * section 2.1; figure 2 * | 1-5, 7-12,14, 15 | |
| A | MIR HASHIM ET AL: "An extensive empirical evaluation of focus measures for digital photography", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9023, 7 March 2014 (2014-03-07), pages 90230I-90230I, XP060035819, DOI: 10.1117/12.2042350 ISBN: 978-1-62841-730-2 * section 2.4 * | 1-15 | TECHNICAL FIELDS SEARCHED (IPC) G06T H04N |

The present search report has been drawn up for all claims

| Place of search | Date of completion of the search | Examiner |
|---|---|---|
| Munich | 23 May 2016 | Zikic, Darko |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **RALPH LEVIEN.** *Resolution-Dependence of Perceived Contrast of Textures, http://www.levien.com/pubs/contrast.pdf*

- **ELI PELI I.** Contrast in Complex Images. *J.Opt.Soc.Am.A,* October 1990, vol. 7 (10, http://serinet.meei.harvard.edu/faculty/peli/papers/Contrast-JOSA. pdf